# EUROPEAN PATENT APPLICATION

(11) **EP 4 834 092 A1**
(43) Date of publication of application: **04.11.2026**
(21) Application number: 24912045.2
(22) Date of filing: 08.11.2024
(51) Int. Cl.: A01D 46/28, A01B 73/00, A01D 46/30, A01D 90/10

(54) **HARVEST CONVEYANCE SYSTEM AND CONTAINER DEVICE**

(30) Priority: 27.12.2023 JP 2023220678
(71) Applicant: KUBOTA CORPORATION, Osaka-shi, Osaka 530-0011 (JP)
(72) Inventor: NAKANISHI, Ryutaro, Sakai-shi, Osaka 590-0908 (JP); YAMAMOTO MURAKAMI, Edwardo Arata, Sakai-shi, Osaka 590-0908 (JP); TANAKA, Satoshi, Sakai-shi, Osaka 590-0908 (JP); NISHIKORI, Hiroki, Sakai-shi, Osaka 590-0908 (JP)
(74) Representative: Cabinet Beau de Loménie
(86) International application number: PCT/JP2024/039868
(87) International publication number: WO 2025/142152

(57) **Abstract**

A conveyance system for a harvested product according to the present disclosure includes a rail array including a plurality of rails 8 provided above a field F in which a crop C is cultivated, and a container device 50 that is suspended from the plurality of rails 8 and is movable along the plurality of rails 8 from a harvest position where a harvested product obtained by harvesting the crop C is loaded to a predetermined stop position located at an edge of the rail array.

## Description

### TECHNICAL FIELD

The present disclosure relates to a conveyance system for a harvested product and a container device.

The present application claims priority based on Japanese Patent Application No. 2023-220678 filed on December 27, 2023, the entire contents of which are incorporated herein by reference.

### BACKGROUND ART

Patent Literature 1 discloses a technique for automatically traveling a work vehicle such as a tractor according to a travel path set in a field and conveying a material.

### CITATION LIST

### [PATENT LITERATURE]

PATENT LITERATURE 1: Japanese Laid-Open Patent Publication No. 2020-103092

### SUMMARY OF THE INVENTION

A conveyance system for a harvested product according to the present disclosure includes a rail array including a plurality of rails provided above a field in which a crop is cultivated, and a container device that is suspended from the plurality of rails and is movable along the plurality of rails from a harvest position where a harvested product obtained by harvesting the crop is loaded to a predetermined stop position located at an edge of the rail array.

### BRIEF DESCRIPTION OF DRAWINGS

[FIG. 1] FIG. 1 is a view illustrating an example of an overall configuration of a farmwork system according to an embodiment.
[FIG. 2] FIG. 2 is a view illustrating a rail unit.
[FIG. 3] FIG. 3 is a view illustrating a part of a support structure including a work unit, a container device, and a solar power generation mechanism.
[FIG. 4] FIG. 4 is a view illustrating a movement mechanism.
[FIG. 5] FIG. 5 is a view for describing movement of a movement mechanism when the movement mechanism passes through a connecting portion between a first rail and a second rail.
[FIG. 6] FIG. 6 is a view illustrating a main part of the container device.
[FIG. 7] FIG. 7 is a block diagram illustrating an example of functional configurations of a control device and a container device.
[FIG. 8] FIG. 8 is a diagram illustrating an example of modes related to movement control of the container device executed by the control device.
[FIG. 9] FIG. 9 is a view illustrating a main part of the container device according to a modification of the embodiment.
[FIG. 10] FIG. 10 is a view illustrating a main part of a container device according to another embodiment.
[FIG. 11] FIG. 11 is a view illustrating a mode when containers are transported and replaced by a plurality of transport vehicles.
[FIG. 12] FIG. 12 is a view illustrating a main part of a container device according to a modification of another embodiment.

### DETAILED DESCRIPTION

### [Problems to be Solved by Present Disclosure]

In the above-described conventional technique, it is necessary to secure a space where a large work vehicle can travel in a field.

Here, depending on the crop cultivated in the field, it may be difficult to allow the work vehicle to travel, such as when a space where the work vehicle can travel cannot be secured.

In such a case, the work vehicle cannot be used even at the time of harvest of the crop, and transportation of the harvested product may be hindered.

For this reason, there is a demand for a technique capable of appropriately conveying a harvested product even when there is no space where the work vehicle can travel.

### [Effects of Present Disclosure]

According to the present disclosure, a harvested product can be appropriately conveyed.

First, contents of the embodiments will be listed and described.

### [Outline of Embodiments]

(1) A conveyance system for a harvested product according to the present disclosure includes a rail array including a plurality of rails provided above a field in which a crop is cultivated, and a container device that is suspended from the plurality of rails and is movable along the plurality of rails from a harvest position where a harvested product obtained by harvesting the crop is loaded to a predetermined stop position located at an edge of the rail array.

According to the above configuration, since the container device suspended from the rails is movable along the rails to the stop position of the edge of the rail array, the harvested product can be transported to an outer edge of the field without securing a space for a vehicle to travel in the field.

As a result, the harvested product can be appropriately conveyed.

(2) In the conveyance system for the harvested product of (1), the container device preferably includes a measurement unit that measures a loading amount of the loaded harvested product, and a movement mechanism that moves the harvested product toward the stop position when the loading amount satisfies a predetermined condition.

In this case, when the loading amount reaches a certain value or more, the container device can be moved to the stop position.

(3) In the conveyance system for the harvested product of (1) or (2), in a case where a tank that is disposed below the predetermined stop position and stores the harvested product is further included, and the container device includes a container in which the harvested product is loaded, and a transfer mechanism that opens and closes a bottom portion of the container to drop the harvested product downward, the tank may include a receiving port to receive the harvested product falling from the container.

In this case, the harvested product loaded on the container device at the stop position can be transferred to the tank.

(4) In the conveyance system for the harvested product of (1), in a case where one or a plurality of harvested product transport vehicles capable of stopping at a vehicle stop position provided below the predetermined stop position are further included, the one or plurality of harvested product transport vehicles preferably include a top plate in which a container for loading the harvested product included in the container device is placed.

In this case, the container loaded with the harvested product can be transported by the harvested product transport vehicle.

(5) In addition, in the conveyance system for the harvested product of (4), preferably, the container device includes a movement mechanism that moves the container along the rails, and a coupling portion that releasably couples the container and the movement mechanism, and when the container is located at the predetermined stop position and the one or plurality of harvested product transport vehicles is located at the vehicle stop position, the connection by the coupling portion is released.

In this case, the container loaded with the harvested product can be separated from the movement mechanism and transported.

(6) In the conveyance system for the harvested product of the above (5), the container device may include an extendable and retractable coupling shaft provided between the coupling portion and the movement mechanism.

In this case, the container can be lowered and placed on the harvested product transport vehicle.

(7) In the conveyance system for the harvested product of (5), the one or plurality of harvested product transportation carriages may further include a lifting mechanism that lifts and lowers the top plate.

In this case, the container can be placed on the top plate after the top plate is raised.

(8) In the conveyance system for the harvested product according to any one of (5) to (7), in a case where the plurality of harvested product transport vehicles includes a first harvested product transport vehicle on which the container is not placed and a second harvested product transport vehicle on which the container that is empty is placed, the first harvested product transport vehicle receives the container whose connection is released from the container device and moves when the first harvested product transport vehicle is stopped at the vehicle stop position, and the second harvested product transport vehicle stops at the vehicle stop position after the first harvested product transport vehicle moves, the empty container may be connected to the movement mechanism by the coupling portion when the second harvested product transport vehicle stops at the vehicle stop position.

In this case, the container device can connect an empty container after disconnecting the container loaded with the harvested product, and can load the harvested product again.

(9) In addition, in the conveyance system for the harvested product of (1), in a case where a harvested product transport vehicle capable of stopping at a vehicle stop position provided below the predetermined stop position is further included, and the container device includes a transfer mechanism that causes the harvested product to fall downward by opening and closing a bottom portion of the container for loading the harvested product included in the container device, the harvested product transport vehicle may include a transport container having a receiving port to receive the harvested product falling from the container.

In this case, the harvested product can be transferred to a harvested product transport vehicle, and the harvested product can be transported by the harvested product transport vehicle.

(10) In the conveyance system for the harvested product of (2), in a case where a farmwork device that moves along the plurality of rails is further included, the movement mechanism is preferably configured to follow the farmwork device until an amount of the harvested product satisfies a predetermined condition.

In this case, even when the farmwork device performs the harvest work while moving in the field, the farmwork device can load the harvested product on the container device.

(11) In the conveyance system for the harvested product according to any one of (1) to (10), in a case where the container device includes a measurement unit that measures a loading amount of the loaded harvested product, the conveyance system may further include an output unit that outputs the loading amount externally.

In this case, the loading amount of the container device can be recognized from the outside.

(12) In the conveyance system for the harvested product of (11), in a case where the container device further includes a detection unit that detects a state of the harvested product, the output unit may output the state together with the loading amount.

In this case, the state of the harvested product of the container device can be recognized from the outside.

(13) From another point of view, the present disclosure is a container device. This container device is provided above a field in which a crop is cultivated, is suspended from a plurality of rails constituting a rail array, and moves along the plurality of rails. The container device includes a container in which a harvested product obtained by harvesting the crop is loaded, a movement mechanism that moves the container along the rails, a measurement unit that measures a loading amount of the harvested product loaded in the container, and a control unit that controls, when the loading amount satisfies a predetermined condition, the movement mechanism to move the container to a predetermined stop position located at an edge of the rail array and stop the container.

### [Details of Embodiment]

Hereinafter, a preferred embodiment will be described with reference to the drawings.

Note that at least some of the embodiments described below may be arbitrarily combined.

### [Overall Configuration of System]

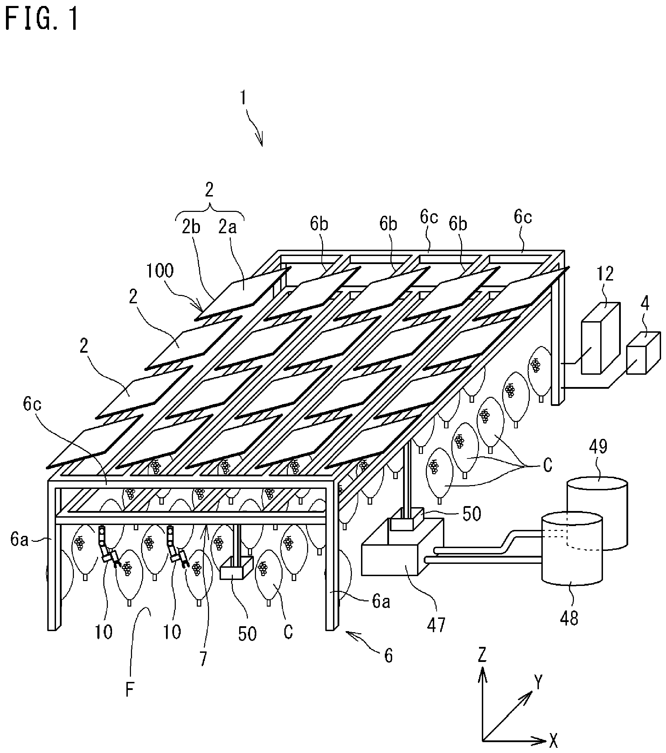

FIG. 1 is a diagram illustrating an example of an overall configuration of a farmwork system according to an embodiment.

In FIG. 1, a farmwork system 1 includes a solar power generation mechanism 100 installed above a field F. The farmwork system 1 can perform solar power generation while cultivating a crop in the field F by the solar power generation mechanism 100.

The crop C cultivated in the field F is, for example, grapes.

In the field F, a tank 47 for storing a harvested product obtained by harvesting the crop C is installed. A pomace storage tank 48 and a juice storage tank 49 are connected to the tank 47. The tank 47 has a function of squeezing fruit, which is a harvested product, and separating the fruit into fruit juice and pomace. In addition, the tank 47 may have functions of a destemmer-crusher and a fruit selector. In this case, the harvested product is separated into fruit stems and fruits by the destemmer-crusher, and then only the fruits are squeezed.

The fruit juice and the pomace separated by the tank 47 are sent to the pomace storage tank 48 and the juice storage tank 49. Note that the pomace storage tank 48 and the juice storage tank 49 may have a function of cooling the stored object.

The tank 47 is installed at an edge of the field F. In addition, the pomace storage tank 48 and the juice storage tank 49 are installed outside the field F.

The farmwork system 1 has a function of controlling (managing) the state of the crop C in the field F and a function of supporting the farmwork in the field F.

Note that, in the following description, three directions orthogonal to each other in each drawing are an X direction, a Y direction, and a Z direction. The Z direction is a vertical direction.

In addition to the solar power generation mechanism 100, the farmwork system 1 includes a control device 4, a support structure 6, a rail unit 7, a plurality of work units 10, and a plurality of container devices 50.

The solar power generation mechanism 100 includes a plurality of solar power generation panels 2 and a plurality of elevation angle variable mechanisms. Each of the plurality of solar power generation panels 2 includes a plurality of cells 2a and a panel frame 2b. The plurality of cells 2a is arranged on the panel frame 2b. The panel frame 2b holds the plurality of cells 2a in a panel shape.

The voltage of the power output from the plurality of solar power generation panels 2 is adjusted via a DC/DC converter or the like and supplied to a power conditioner (PCS) 12. The PCS 12 converts the power from the plurality of solar power generation panels 2 into an alternating current, and supplies the power to a load connected to the PCS 12. In addition, the PCS 12 is connected to a commercial AC power supply system, and may supply power from the plurality of solar power generation panels 2 to the system.

Further, each unit of the present system 1 is connected to the PCS 12 as a load. Therefore, the power of the plurality of solar power generation panels 2 is supplied to each unit of the present system 1.

That is, the PCS 12 functions as a power supply device that supplies the power generated by the solar power generation panels 2 to the work units 10 (the farmwork device or the movement mechanism).

In this case, the power from the solar power generation panel 2 can be effectively used.

Note that the farmwork system 1 may include a storage battery for storing the output of the DC/DC converter. The DC power stored in the storage battery is used as power output at a charging station to be described later or DC power required in the present system 1.

The support structure 6 supports the plurality of solar power generation panels 2. The support structure 6 includes a plurality of pillars 6a, a plurality of beam frames 6b, and a plurality of support frames 6c. The plurality of pillars 6a, the plurality of beam frames 6b, and the plurality of support frames 6c are rod-shaped members made of a steel material, an aluminum alloy material, or the like.

The plurality of (four in the illustrated example) pillars 6a is erected in the Z direction at the edge of the field F. Note that, in FIG. 1, the pillars 6a are provided at four corners of the field F.

The plurality of (five in the illustrated example) beam frames 6b is provided above the field F. The plurality of beam frames 6b extends in the Y direction. The plurality of beam frames 6b is arranged side by side in the X direction at regular intervals.

The plurality of elevation angle variable mechanisms described above is provided above the plurality of beam frames 6b, respectively. The plurality of elevation angle variable mechanisms support the solar power generation panels 2 on the beam frames 6b such that the elevation angles of the solar power generation panels 2 can be changed.

The plurality of (two in the illustrated example) support frames 6c extends in the X direction. The plurality of support frames 6c connects the distal ends of the plurality of beam frames 6b and the distal ends of the pillars 6a. Thereby, the plurality of beam frames 6b and the plurality of solar power generation panels 2 are supported above the field F.

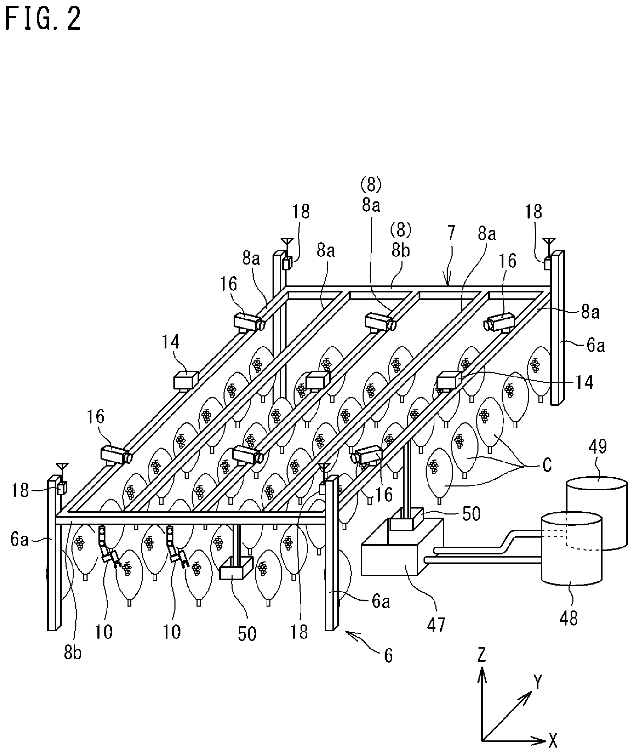

FIG. 2 is a diagram illustrating the rail unit 7. FIG. 2 illustrates the support structure 6 in a state in which the solar power generation mechanism 100, the beam frames 6b of the support structure 6, and the support frame 6c are removed.

The rail unit 7 constitutes tracks on which the plurality of work units 10 and the container devices 50 travel. The rail unit 7 is provided between the plurality of solar power generation panels 2 and the ground of the field F.

The rail unit 7 includes a plurality of rails 8. The plurality of rails 8 is, for example, rod-shaped members made of C-shaped steel. The plurality of rails 8 includes a plurality of first rails 8a and a plurality of second rails 8b.

The plurality of (five in the illustrated example) first rails 8a extends in the Y direction. The plurality of first rails 8a is arranged side by side in the X direction at regular intervals.

The plurality of (two in the illustrated example) second rails 8b extends in the X direction. The plurality of second rails 8b connects the distal ends of the plurality of first rails 8a to each other. Thus, the rail unit 7 is configured in a lattice shape. In other words, the rail unit 7 is a rail array including the plurality of rails 8.

The rail unit 7 is provided with a plurality of environment detection units 14. The plurality of environment detection units 14 is provided at predetermined intervals over the entire field F. The plurality of environment detection units 14 includes, for example, a temperature and humidity sensor and an air volume sensor. The environment detection unit 14 detects temperature, humidity, and air volume as the environment of the field F. The environment detection unit 14 is communicably connected to the control device 4. The output of the environment detection unit 14 is given to the control device 4.

Further, the rail unit 7 is provided with a plurality of cameras 16. The plurality of cameras 16 is provided at predetermined intervals over the entire field F. The plurality of cameras 16 images the crop C in the field F. The plurality of cameras 16 is communicably connected to the control device 4. The image data output from the plurality of cameras 16 is provided to the control device 4.

Further, the support structure 6 is provided with a plurality of wireless communication devices 18. The plurality of wireless communication devices 18 is provided at predetermined intervals over the entire field F. The plurality of wireless communication devices 18 has a function of performing wireless communication with the work units 10 and the container devices 50. The plurality of wireless communication devices 18 is connected to the control device 4. The control device 4 can communicate with the work units 10 and the container devices 50 via the plurality of wireless communication devices 18.

The plurality of wireless communication devices 18 communicates with the work units 10 and the container devices 50, for example, by a wireless LAN. That is, the plurality of wireless communication devices 18 serves as access points. In the following description, the plurality of wireless communication devices 18 may be referred to as access points 18.

Note that FIG. 2 illustrates a case where the access points 18 are provided on the four pillars 6a, respectively. The access points 18 may be provided on the support structure 6 or may be provided on the rail unit 7.

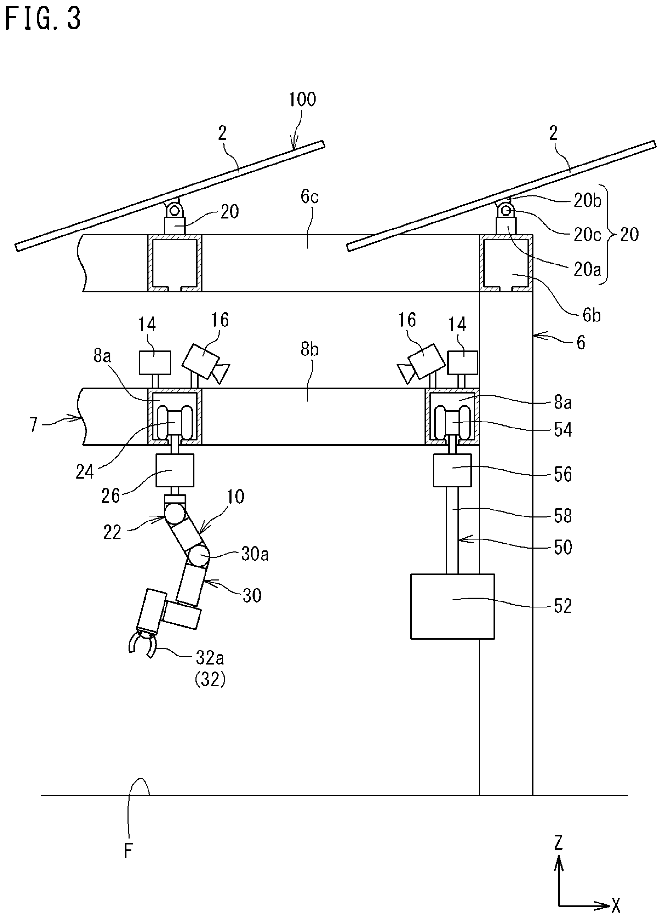

FIG. 3 is a diagram illustrating a part of the support structure 6 including the work units 10, the container devices 50, and the solar power generation mechanism 100.

As described above, the solar power generation panels 2 and elevation angle variable mechanisms 20 are provided on the beam frames 6b of the support structure 6. On the beam frames 6b, the elevation angle variable mechanisms 20 are provided. Each elevation angle variable mechanism 20 includes a base 20a, a support portion 20b, and an actuator 20c. The base 20a is provided on the upper surface of the beam frame 6b. The support portion 20b is pivotally provided on the base 20a. The support portion 20b rotates about an axis in the Y direction. The support portion 20b is fixed to the lower surface of the solar power generation panel 2. Thus, the solar power generation panel 2 is rotatable with respect to the base 20a together with the support portion 20b. Thereby, the elevation angle variable mechanism 20 supports the solar power generation panel 2 so that the elevation angle of the solar power generation panel 2 can be changed. The actuator 20c drives the rotation of the support portion 20b. That is, the elevation angle of the solar power generation panel 2 can be changed by controlling the actuator 20c.

The actuator 20c is controlled by the control device 4.

In the present embodiment, the solar radiation amount of the field F and the wind volume of the field F can be adjusted by changing the elevation angle of the solar power generation panel 2 by the elevation angle variable mechanism 20.

That is, the elevation angle variable mechanism 20 constitutes an adjustment mechanism that adjusts the solar radiation amount of the field F.

The plurality of work units 10 is suspended from the rail unit 7. The plurality of work units 10 moves along the rails 8 of the rail unit 7, and has a function of executing farmwork on the crops C of the field F and a function of detecting the state of the crops C.

Similar to the work units 10, the plurality of container devices 50 is suspended from the rail unit 7. The plurality of container devices 50 has a function of loading a fruit which is a harvested product and a function of transporting the loaded fruit by moving along the rails 8.

### [Work Units 10 and Container Devices 50]

In FIG. 3, each of the plurality of work units 10 includes a farmwork device 22, a movement mechanism 24, and a control box 26.

The farmwork device 22 has a function of executing farmwork performed on the crop C and a function as a sensor that detects a state of the crop C.

The movement mechanism 24 has a function of moving the farmwork device 22 along the rails 8.

The farmwork device 22 includes an arm 30 and an end effector 32.

An upper end of the arm 30 is fixed to the movement mechanism 24. The arm 30 extends downward from the movement mechanism 24. The end effector 32 is provided at the lower end of the arm 30.

The arm 30 is a manipulator capable of changing the position of the end effector 32 within a predetermined range around the movement mechanism 24. The arm 30 is an articulated manipulator including a plurality of joints 30a.

The end effector 32 is a device capable of performing a work operation such as farmwork on the crop C. The end effector 32 is disposed at the work position by the arm 30. The end effector 32 performs a work operation at the work position.

The end effector 32 is detachably attached to the arm 30.

In the present embodiment, a plurality of types of the end effector 32 is prepared for each work operation. Therefore, the farmwork device 22 can perform a plurality of types of work operations by replacing the end effector 32.

The end effector 32 includes an end effector 32 for harvest work, an end effector 32 for pruning, an end effector 32 for water discharge, an end effector 32 for fertilization, an end effector 32 for applying agricultural chemicals, an end effector 32 for detecting the state of the crop C, and an end effector 32 for imaging.

In FIG. 3, the end effector 32a is for harvest. The end effector 32a for harvest can grip the fruit of the crop C and execute harvest work of the fruit.

The farmwork device 22 loads the harvested fruit into the container devices 50.

The container devices 50 convey the fruit harvested by the farmwork device 22 and a worker of the field. The fruit to be conveyed by the container devices 50 is loaded by the farmwork device 22 and the worker.

Each of the container devices 50 includes a container 52, a movement mechanism 54, a control box 56, and a coupling shaft 58.

The container 52 is a container in which the fruit (harvested product) is loaded.

The movement mechanism 54 has a function of moving the container 52 along the rails 8. The movement mechanism 54 has the same configuration as the movement mechanism 24.

The coupling shaft 58 couples the movement mechanism 54 and the container 52.

The control box 56 is fixed to the coupling shaft 58. The control box 56 accommodates a control device that controls each unit of the container device 50, a storage battery, a wireless communication device, and the like therein.

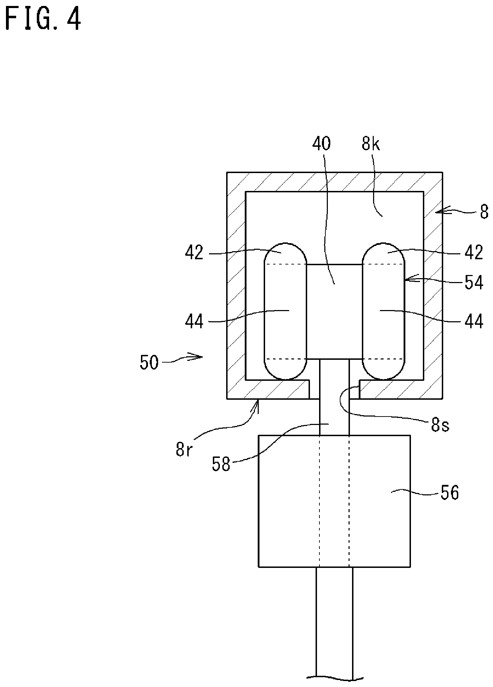

FIG. 4 is a diagram illustrating the movement mechanism 54. FIG. 4 illustrates the movement mechanism 54 when one of the rails 8 is viewed from the direction in a longitudinal direction. Thus, the rail 8 is illustrated in a cross-sectional view along a plane orthogonal to the longitudinal direction of the rail 8. Note that the movement mechanism 24 also has the same configuration as the movement mechanism 54. Therefore, only the movement mechanism 54 will be described here.

As described above, the rail 8 is C-shaped steel. Therefore, a bottom plate 8r of the rail 8 has a slit 8s in the longitudinal direction. The bottom plate 8r of the rail 8 is a member constituting the lower surface of the rail 8. The slit 8s communicates the inside and the outside of the rail 8. The slit 8s opens downward.

The movement mechanism 54 travels in an internal space 8k of the rail 8.

The movement mechanism 54 includes a main body 40, a pair of wheels 42, and a pair of motors 44.

The pair of motors 44 is provided at both ends of the main body 40. Rotating shafts of the pair of motors 44 are provided concentrically with each other. Each motor 44 of the pair is a so-called in-wheel motor. Therefore, the pair of wheels 42 is integrally provided on the outer peripheral surfaces of rotors (not illustrated) of the pair of motors 44. The pair of motors 44 rotatably drives the pair of wheels 42 while constituting an axle of the pair of wheels 42.

The main body 40 is interposed between the pair of motors 44 and integrally connects the pair of motors 44. The coupling shaft 58 is fixed to the main body 40. The coupling shaft 58 extends downward from the main body 40, passes through the slit 8s, and protrudes from the bottom plate 8r of the rail 8. The lower end of the coupling shaft 58 is connected to the container 52.

The control box 56 is disposed below the rail 8.

Note that the pair of motors 44 is controlled independently of each other. Therefore, the pair of motors 44 may rotate in the same direction or rotate in opposite directions.

Since the bottom plate 8r of the rail 8 has the slit 8s, the coupling shaft 58 protrudes from the bottom plate 8r of the rail 8. Further, the pair of wheels 42 is in contact with the bottom plate 8r. Thus, the container device 50 is suspended from the rail 8. Further, when the pair of wheels 42 is rotationally driven by the pair of motors 44, the container device 50 travels on the bottom plate 8r. Accordingly, the container device 50 can move along the rail 8 of the rail unit 7.

The container device 50 can move on the first rail 8a and the second rail 8b included in the rail 8. Therefore, the container device 50 can move throughout the rail unit 7.

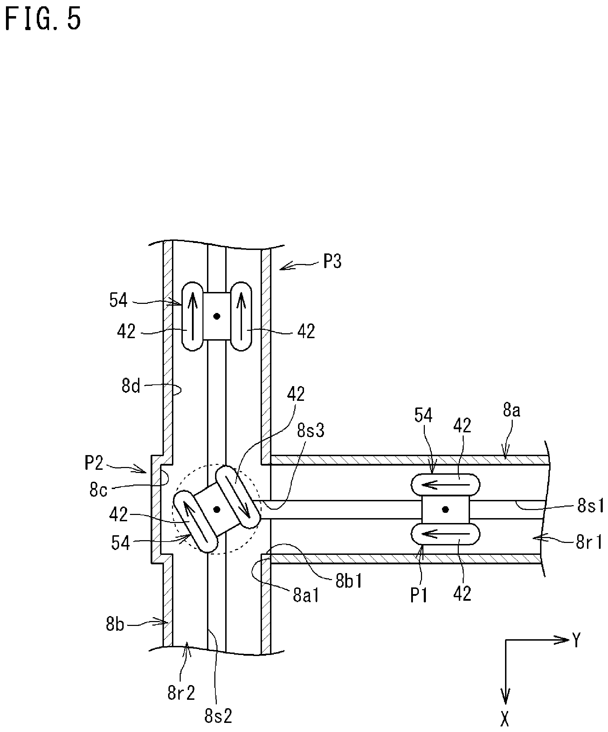

FIG. 5 is a diagram for describing the movement of the movement mechanism 54 when passing through the connecting portion between the first rail 8a and the second rail 8b. FIG. 5 illustrates the movement mechanism 54 when the rail 8 is viewed from above. Thus, the rail 8 is illustrated as a cross-sectional view along the X-Y plane.

FIG. 5 illustrates a state where the movement mechanism 54 moves from a position P1 to a position P3 via the position P2. The position P1 is a position on the first rail 8a. At the position P1, the movement mechanism 54 travels on the first rail 8a toward the second rail 8b. Therefore, at this time, the pair of motors 44 of the movement mechanism 54 rotates in the same direction.

An end 8a1 of the first rail 8a is connected to an opening 8b1 of the second rail 8b. The opening 8b1 is provided corresponding to the end 8a1. A bottom plate 8r1 of the first rail 8a and a bottom plate 8r2 of the second rail 8b are connected at the opening 8b1.

Therefore, the movement mechanism 54 traveling on the first rail 8a can enter the internal space of the second rail 8b through the opening 8b1.

The bottom plate 8r2 of the second rail 8b is provided with a connecting slit 8s3 in addition to a slit 8s2. The connecting slit 8s3 is connected to a slit 8a2 of the second rail 8b at a right angle. The connecting slit 8s3 connects the slit 8a2 of the second rail 8b and a slit 8s1 of the first rail 8a.

When entering the internal space of the second rail 8b through the opening 8b1, the movement mechanism 54 travels inside the second rail 8b along the connecting slit 8s3 and reaches a point where the slit 8s2 and the connecting slit 8s3 are connected.

The position P2 is a point where the slit 8s2 and the connecting slit 8s3 are connected.

When the movement mechanism 54 reaches the position P2, the pair of motors 44 is controlled to rotate in opposite directions. Thereby, the movement mechanism 54 rotates on the spot while being located at the position P2. That is, the movement mechanism 54 changes its direction while being located at the position P2. When the rotating shafts of the pair of motors 44 become substantially parallel to the Y direction, the movement mechanism 54 ends the direction change, starts traveling along the slit 8s2 of the second rail 8b, and proceeds to the position P3.

As described above, the movement mechanism 54 passes through the connecting portion between the first rail 8a and the second rail 8b.

As described above, the movement mechanism 54 (container device 50) can move between the first rail 8a and the second rail 8b, and can move over the entire region of the rail unit 7.

Note that, in the second rail 8b, a relief portion 8c is provided in a portion facing the opening portion 8b1. The relief portion 8c is a portion recessed outward with respect to the inner surface 8d of the second rail 8b. The relief portion 8c is provided to prevent the movement mechanism 54 that changes its direction at the position P2 from coming into contact with the inner surface 8d of the second rail 8b.

As described above, in the present embodiment, since the rail unit 7 is provided on the support structure 6 that supports the solar power generation panels 2, the container devices 50 and the work units 10 that can move over the entire field F can be easily installed.

As a result, it is possible to improve the efficiency of the management work and the farmwork of the field F.

Further, in the present embodiment, since the rail unit 7 is supported by the support structure 6, the rail unit 7 can be installed without providing pillars for instructing the rail unit 7 separately other than the support structure 6.

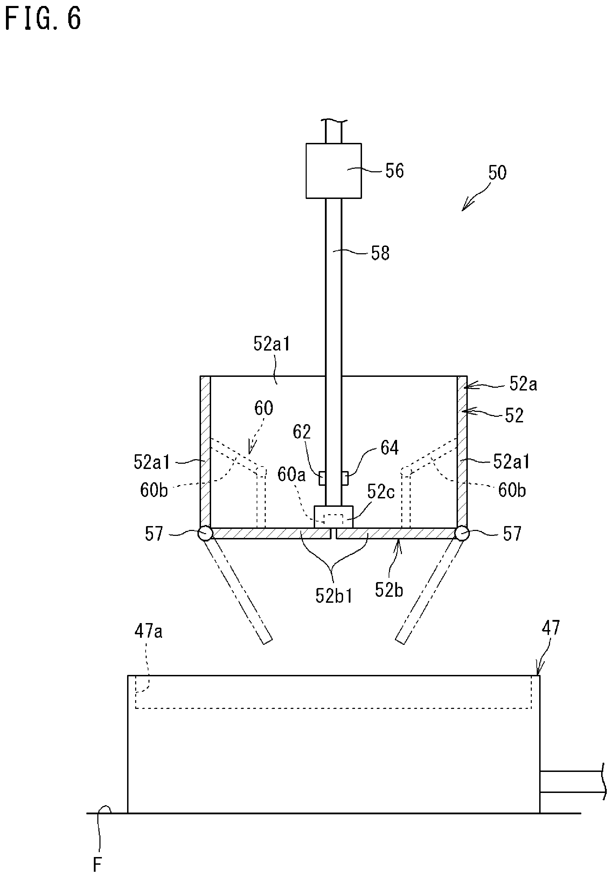

FIG. 6 is a diagram illustrating a main part of the container device 50. In FIG. 6, the container 52 is illustrated as a cross-sectional view.

In addition, FIG. 6 illustrates a case where the container device 50 is located above the tank 47.

The container device 50 moves from a loading position where the fruit is loaded to a predetermined stop position. In the present embodiment, the stop position is a position corresponding to the position where the tank 47 is installed among the positions on the rail unit 7.

As illustrated in FIG. 1 and FIG. 2, the tank 47 is installed at an edge of the field F. Therefore, the stop position is a position on the first rail 8a located at the edge of the rail unit 7.

FIG. 6 illustrates a case where the container device 50 is located at the stop position.

As illustrated in FIG. 6, the container 52 is a rectangular box-shaped container formed of a steel plate, an aluminum alloy material, or the like and having an opening on the upper surface. The container 52 includes a side wall portion 52a, a bottom portion 52b, and a beam portion 52c.

The side wall portion 52a is a rectangular tubular member constituting a side surface of the container 52. The side wall portion 52a includes four side plates 52a1. The fruit is loaded into the container 52 through the opening on the upper side of the side wall portion 52a.

The beam portion 52c connects a pair of side plates 52a1 facing each other among the four side plates 52a1. The coupling shaft 58 is connected to the beam portion 52c. The coupling shaft 58 connects the beam portion 52c of the container 52 and the movement mechanism 54.

The bottom portion 52b is a plate-like member constituting the bottom surface of the container 52. The bottom portion 52b closes a lower opening of the side wall portion 52a.

The bottom portion 52b includes a pair of bottom plates 52b1. The pair of bottom plates 52b1 is provided on the pair of side plates 52a1 parallel to the beam portion 52c.

End edges of the pair of bottom plates 52b1 and end edges of the pair of side plates 52a1 are connected via a hinge 57. Accordingly, the pair of bottom plates 52b1 can be opened and closed around the hinge 57 as indicated by a two-dot chain line in FIG. 6.

When the pair of bottom plates 52b1 is in the closed state, distal ends of the pair of bottom plates 52b1 abut on the beam portion 52c.

When the bottom portion 52b is opened and closed, the fruit loaded in the container 52 can be transferred downward.

The container device 50 includes a transfer mechanism 60 that transfers the fruit in the downward direction. The transfer mechanism 60 includes a locking device 60a and a closure device 60b.

The locking device 60a is provided on the beam portion 52c. The locking device 60a holds or releases the distal ends of the pair of bottom plates 52b1 in the closed state. When the locking device 60a is in a holding state, the bottom portion 52b is in a closed state, and the fruit is loaded into the container 52. When the locking device 60a is switched from the holding state to a release state, the bottom portion 52b is changed from the closed state to the open state by the weight of the fruit, and the fruit falls downward.

In this manner, the locking device 60a of the transfer mechanism 60 transfers the fruit in the container 52 downward by opening the bottom portion 52b of the container 52.

The closure device 60b has a function of pivoting the bottom portion 52b in the open state to the closed state. The closure device 60b includes a link mechanism, an actuator, and the like for pivoting the bottom portion 52b (the pair of bottom plates 52b1). The closure device 60b brings the bottom portion 52b into the closed state after transferring the fruit in the container 52 downward. Thereafter, the locking device 60a enters the holding state. Accordingly, the inside of the container 52 becomes empty, and the fruit can be loaded again.

As illustrated in FIG. 6, the tank 47 has a receiving port 47a for receiving the fruit. The receiving port 47a is provided on the upper surface of the tank 47. Thus, the receiving port 47a can receive the fruit falling from above.

As illustrated in FIG. 6, when the container device 50 is located at the stop position, when the locking device 60a is switched from the holding state to the release state, the fruit in the container 52 falls downward.

The dropped fruit is received by the receiving port 47a of the tank 47.

As described above, in the present embodiment, since the container device 50 includes the transfer mechanism 60 that causes the fruit to fall downward and the tank 47 includes the receiving port 47a, the fruit (harvested product) loaded in the container device 50 at the stop position can be transferred to the tank 47.

According to the above configuration, since the container device 50 suspended from the rail 8 is movable along the rail 8 to the stop position of the edge of the rail unit 7, the fruit can be conveyed to an outer edge of the field F without securing a space for a vehicle such as a tractor to travel in the field F.

As a result, the fruit can be appropriately conveyed.

As described above, the farmwork system 1 includes the rail unit 7 and the container device 50, thereby constituting a conveyance system for a harvested product.

In addition, as illustrated in FIG. 6, the container device 50 includes a measurement unit 62 and a detection unit 64.

The measurement unit 62 has a function of measuring the loading amount of the fruit loaded in the container 52. For example, the measurement unit 62 measures the weight of the entire container 52. By measuring the gravity of the entire container 52, the weight of the fruit loaded in the container 52 is measured as the loading amount.

Note that the loading amount measured by the measurement unit 62 may be a volume occupied by the fruit in the container 52.

The detection unit 64 has a function of detecting the state of the fruit loaded in the container 52. The state detected by the detection unit 64 includes, for example, sugar content, acidity, and water content of the fruit.

### [Functional Configuration of Control Device 4 and Container Devices 50]

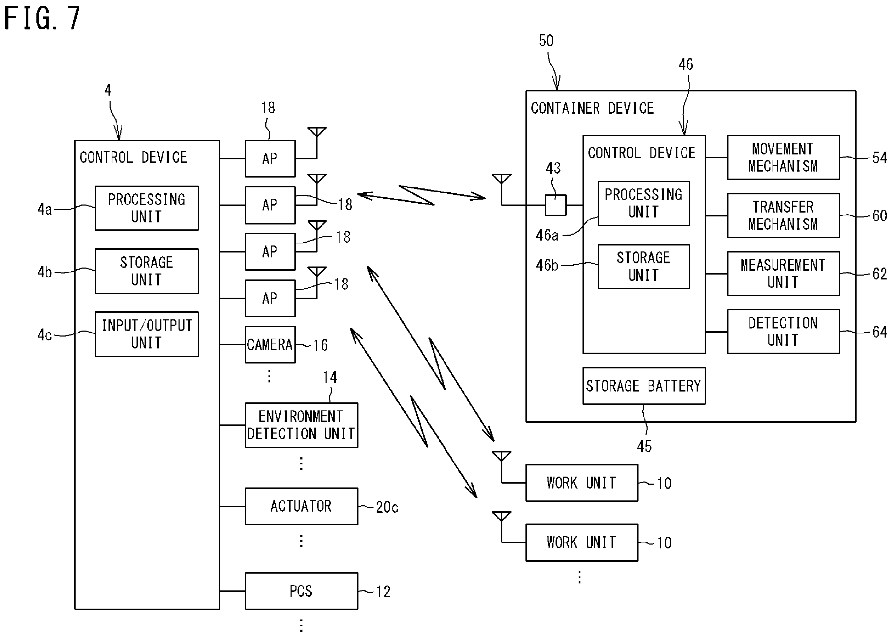

FIG. 7 is a block diagram illustrating an example of functional configurations of the control device 4 and the container devices 50.

The control device 4 is a computer such as a personal computer or a server. The control device 4 may be a smartphone, a tablet, or the like, or may be a computer system on a cloud.

A plurality of access points 18, a plurality of environment detection units 14, a plurality of cameras 16, and a plurality of actuators 20c are connected to the control device 4.

The control device 4 and these devices are connected to communicate with each other in a wired or wireless manner. The control device 4 can control these devices by giving control commands. Further, the control device 4 can receive outputs given from these devices.

The control device 4 is communicably connected to various information servers via a network. The network may be a local network or a global network. Furthermore, the network may be configured by combining a local network and a global network.

The control device 4 includes a processing unit 4a, a storage unit 4b, and an input/output unit 4c.

The processing unit 4a is, for example, various processors adapted to control of a computer, such as a central processing unit (CPU), a graphics processing unit (GPU), a digital signal processor (DSP), and a field programmable gate array (FPGA).

The storage unit 4b is, for example, a flash memory, a hard disk, a read only memory (ROM), a random access memory (RAM), or the like.

The storage unit 4b stores a computer program to be executed by the processing unit 4a and necessary information. The processing unit 4a implements various processing functions of the processing unit 4a by executing a computer program stored in a computer-readable non-transitory recording medium such as the storage unit 4b.

The processing unit 4a has a function of controlling the environment detection unit 14, the camera 16, the work units 10 (the farmwork device 22), the container devices 50, and the like to perform quality control of the crop C in the field F, to cause the work units 10 to perform farmwork, and to cause the container devices 50 to perform fruit conveyance work.

In addition, the processing unit 4a has a function of executing processing of detecting the positions of the plurality of work units 10 and the positions of the plurality of container devices 50. The processing unit 4a performs wireless LAN communication with the work units 10 and the container devices 50 via the plurality of access points 18. The processing unit 4a acquires, from the plurality of access points 18, information regarding received signals when receiving signals from the work units 10 and the container devices 50. The processing unit 4a detects the positions of the work units 10 and the positions of the container devices 50 based on the information regarding the received signals acquired from the plurality of access points 18. The information related to the received signal includes a received signal strength indicator (RSSI) and channel state information (CSI).

The plurality of access points 18 is provided at predetermined intervals over the entire field F. That is, the positions of the plurality of access points 18 are known. Therefore, the positions of the work units 10 and the positions of the container devices 50 as signal sources can be detected by analyzing the information regarding the received signals in the plurality of access points 18. The processing unit 4a detects the position of each of the plurality of work units 10. The detected positions of the work units 10 and the positions of the container devices 50 are used to control the work units 10 and the container devices 50. Further, the positions of the work units 10 and the positions of the container devices 50 may be provided to the work units 10 and the container devices 50.

In the present embodiment, since the solar power generation panels 2 are provided above the work units 10, position detection using a GPS receiver may be difficult.

On the other hand, in the present embodiment, since the positions of the work units 10 and the positions of the container devices 50 are detected using the plurality of access points 18, the positions of the work units 10 and the positions of the container devices 50 can be accurately detected even if the solar power generation panels 2 are provided above.

Note that the positions of the work units 10 and the container devices 50 may be detected by distance measurement using a laser beam, or may be detected by distance measurement using a stereo camera. In the position detection by distance measurement, the position of each work unit 10 (container device 50) is detected by measuring the distance between the work unit 10 (container device 50) and the reference position.

Further, the processing unit 4a can also detect the position of the worker working in the field F based on the image data obtained by the plurality of cameras 16.

The input/output unit 4c has a function of receiving an input by an operator of the control device 4 and a function of outputting various types of information. The input/output unit 4c includes, for example, an input device such as a keyboard, a mouse, or a touch panel, and an output device such as a monitor, a speaker, or a printer.

Each of the container devices 50 includes a control device 46, a storage battery 45, and a wireless communication device 43 in addition to the movement mechanism 54, the transfer mechanism 60, the measurement unit 62, and the detection unit 64 described above.

The control device 46, the storage battery 45, and the wireless communication device 43 are accommodated in the control box 56. The control device 46 has a function of controlling the movement mechanism 54 and the transfer mechanism 60.

The storage battery 45 supplies power to each unit of the container device 50.

The wireless communication device 43 is used for wireless communication with the control device 4. The wireless communication device 43 has a function of performing wireless LAN communication with a plurality of access points 18.

The control device 46 is a computer. The movement mechanism 54, the transfer mechanism 60, the measurement unit 62, the detection unit 64, and the wireless communication device 43 are connected to the control device 46.

The control device 46 can control these devices by giving control commands. Further, the control device 46 can receive outputs given from these devices.

The control device 46 includes a processing unit 46a and a storage unit 46b.

The processing unit 46a is, for example, various processors adapted to control of a computer, such as a central processing unit (CPU), a graphics processing unit (GPU), a digital signal processor (DSP), and a field programmable gate array (FPGA).

The storage unit 46b is, for example, a flash memory, a hard disk, a read only memory (ROM), a random access memory (RAM), or the like.

The storage unit 46b stores a computer program to be executed by the processing unit 46a and necessary information. The processing unit 46a implements various processing functions of the processing unit 46a by executing a computer program stored in a computer-readable non-transitory recording medium such as the storage unit 46b.

The processing unit 46a has a function of controlling the pair of motors 44 of the movement mechanism 54 to move the container device 50 to any position in the rail unit 7.

In addition, the processing unit 46a has a function of controlling the transfer mechanism 60 to transfer the fruit in the container 52 to the tank 47.

The processing unit 46a moves the container device 50 to a predetermined position in the rail unit 7 or controls the transfer mechanism 60 to transfer the fruit in the container 52 based on the mode set for the processing unit 46a.

Further, when receiving the output of the measurement unit 62 and the output of the detection unit 64, the processing unit 46a performs processing of giving these outputs to the control device 4.

When the output of the measurement unit 62 and the output of the detection unit 64 are given, the processing unit 4a of the control device 4 outputs the loading amount obtained from the output of the measurement unit 62 and the state of the fruit obtained from the output of the detection unit 64 using the output device of the input/output unit 4c. The control device 4 can notify the operator of the loading amount of the fruit and the state of the fruit in the container 52.

Accordingly, the loading amount of the container device 50 and the state of the fruit of the container device 50 can be recognized from the outside.

In addition, the processing unit 46a acquires the charge level of the storage battery 45, and moves the container device 50 to a charging station when the charge level becomes smaller than a predetermined charge level.

The charging station (not illustrated) is provided within a movement range of the container device 50. The container device 50 located in the charging station can have the storage battery 45 charged. As described above, the processing unit 46a can charge the storage battery 45 by moving the container device 50 to the charging station.

The work units 10 each include a control device, a storage battery, and a wireless communication device, in addition to the farmwork device 22 and the movement mechanism 24 described above, similarly to the container device 50.

The control device of the work unit 10 controls the farmwork device 22 and the movement mechanism 24 based on control commands from the control device 4.

In addition, the control device of the work unit 10 may autonomously control the farmwork device 22 and the movement mechanism 24.

### [Movement Control of Container Device 50]

The control of movement of the container device 50 includes a plurality of modes. The processing unit 46a of the control device 46 performs movement control of the container device 50 based on a selected mode among the plurality of modes.

Note that this movement control is executed when the work unit 10 (the farmwork device 22) performs the harvest work of the crop C. The container device 50 performs a fruit transportation operation accompanying the harvest work. The container device 50 moves based on the movement control during the conveyance work.

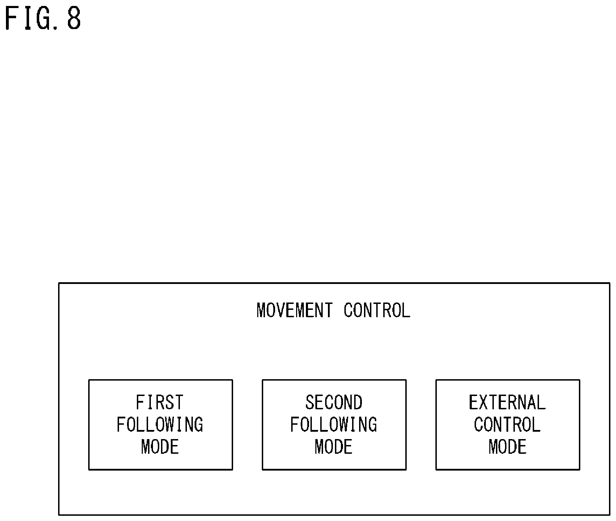

FIG. 8 is a diagram illustrating an example of modes related to movement control of the container device 50 executed by the control device 46.

The mode related to the movement control of the container device 50 includes three modes of a first following mode, a second following mode, and an external control mode. The selection of the mode may be performed by the control device 4 or may be performed by an operator of the control device 4.

The first following mode is a mode for causing the container device 50 to move following the work unit 10 (farmwork device 22).

When the first following mode is selected, the processing unit 46a moves following the work unit 10 while maintaining a certain distance. Accordingly, the work unit 10 can load the harvested fruit into the container 52 of the container device 50.

When the loading amount detected by the measurement unit 62 satisfies a predetermined condition, the processing unit 46a moves the container device 50 to the stop position.

In the present embodiment, the predetermined condition is that the loading amount exceeds a preset threshold. When the loading amount exceeds a preset threshold, the processing unit 46a moves the container device 50 to the stop position and transfers the loaded fruit to the tank 47.

That is, in the first following mode, when the loading amount reaches a certain value or more, the container device 50 can be moved to the stop position.

Note that, in this case, the processing unit 46a autonomously performs movement control of the container device 50. The processing unit 46a requests position information of the plurality of work units 10 and position information of the plurality of container devices 50 from the control device 4. The processing unit 46a performs movement control based on position information given from the control device 4.

The second following mode is a mode for causing the container device 50 to move following the worker in the field F.

When the second following mode is selected, the processing unit 46a moves following the worker while maintaining a certain distance. Accordingly, the worker can load the harvested fruit into the container 52 of the container device 50.

In addition, also in the second following mode, when the loading amount detected by the measurement unit 62 satisfies a predetermined condition, the processing unit 46a moves the container device 50 to the stop position and transfers the loaded fruit to the tank 47.

Therefore, even in the second following mode, when the loading amount reaches a certain value or more, the container device 50 can be moved to the stop position.

Similarly to the first following mode, the processing unit 46a autonomously controls the movement of the container device 50. The processing unit 46a requests the position information of the worker, the position information of the plurality of work units 10, and the position information of the plurality of container devices 50 from the control device 4. The processing unit 46a performs movement control based on position information given from the control device 4.

As described above, in the first following mode and the second following mode, even when the work unit 10 (the farmwork device 22) and the worker perform the harvest work while moving in the field F, the work unit 10 and the worker can load the fruit on the container device 50.

The external control mode is a mode in which the control device 4 controls the container device 50.

When the external control mode is selected, the processing unit 46a controls movement of the container device 50 based on a command given from the control device 4.

In the case of the external control mode, the loading amount in the container 52 may be managed by the control device 4. When the loading amount satisfies a predetermined condition, the control device 4 moves the container device 50 to the stop position and transfers the loaded fruit to the tank 47.

Note that, in the external control mode, a worker may give a command to the processing unit 46a by a controller or the like.

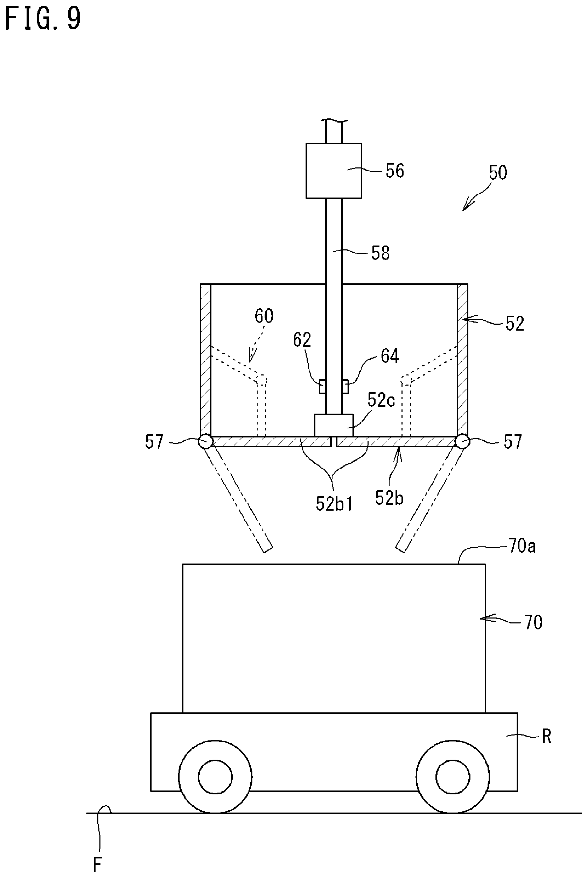

Note that, in the present embodiment, the case where the tank 47 is provided below the stop position has been exemplified, but as illustrated in FIG. 9, a transport vehicle R that transports the fruit may be configured to stop below the stop position.

A vehicle stop position of the transport vehicle R is provided below the stop position of the container device 50.

FIG. 9 illustrates a case where the container device 50 is located at the stop position and the transport vehicle R is located at the vehicle stop position.

The transport vehicle R is, for example, an automatic guided vehicle (AGV) or the like.

In this case, the transport vehicle R stopped at the vehicle stop position includes a transport container 70. The transport container 70 has a receiving port 70a for receiving the fruit. The receiving port 70a is provided on the upper surface of the transport container 70. Thus, the receiving port 70a can receive the fruit falling from above.

When the container device 50 stops at the stop position and the transport vehicle R stops at the vehicle stop position, the transport vehicle R stops below the container device 50 as illustrated in FIG. 9.

Here, the container device 50 drops the fruit in the container 52 downward and transfers the fruit from the container 52 to the transport vehicle R.

Therefore, according to the modification illustrated in FIG. 13, the fruit can be transferred to the transport vehicle R, and the fruit can be transported by the transport vehicle R.

### [Other Embodiments]

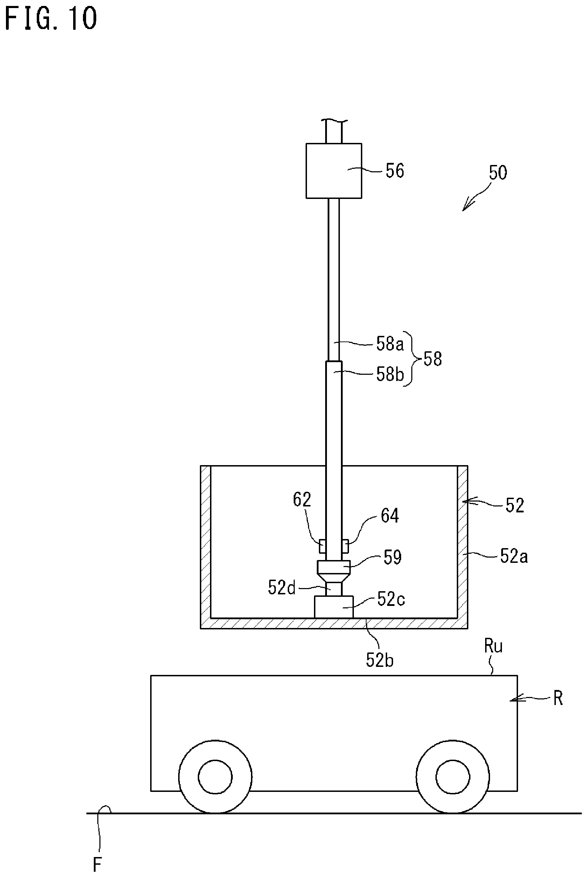

FIG. 10 is a diagram illustrating a main part of the container device 50 according to another embodiment. In FIG. 10, the container 52 is illustrated as a cross-sectional view.

The present embodiment is different from the above embodiment in that a coupling portion 59 that releasably couples the container 52 and the movement mechanism 54 is provided, that the coupling shaft 58 is extendable and retractable, and that the transport vehicle R is configured to stop below the stop position instead of the tank 47.

FIG. 10 illustrates a case where the container device 50 is located at the stop position and the transport vehicle R is located at the vehicle stop position.

Therefore, a vehicle stop position of the transport vehicle R is provided below the stop position of the container device 50.

The side wall portion 52a and the bottom portion 52b included in the container 52 of the present embodiment are integrated. A projection 52d gripped by the coupling portion 59 is provided on the upper surface of the beam portion 52c.

The coupling portion 59 is provided at the distal end of the coupling shaft 58. The coupling portion 59 has a chuck function for gripping the projection 52d. The coupling portion 59 includes an actuator (not illustrated) that drives gripping and releasing of the projection 52d. Therefore, the operation of the coupling portion 59 is controlled by controlling the actuator.

The coupling portion 59 releasably connects the container 52 and the movement mechanism 54 by gripping and releasing the gripping of the projection 52d.

The coupling shaft 58 includes an inner cylinder portion 58a and an outer cylinder portion 58b. The inner cylinder portion 58a is inserted into the outer cylinder portion 58b. The inner cylinder portion 58a and the outer cylinder portion 58b are relatively movable in the axial direction. The coupling shaft 58 includes an actuator (not illustrated) that drives relative movement between the inner cylinder portion 58a and the outer cylinder portion 58b. The coupling shaft 58 is driven by the actuator to extend and retract. The extending and retracting operation of the coupling shaft 58 is controlled by controlling an actuator.

The actuator of the coupling portion 59 and the actuator of the coupling shaft 58 can be controlled by the processing unit 46a of the control device 46. Therefore, the operation control of the coupling portion 59 and the operation control of the coupling shaft 58 are performed by the processing unit 46a.

The transport vehicle R is an automatic guided vehicle. A top plate Ru on which the container 52 is placed is provided on the upper surface of the transport vehicle R.

The transport vehicle R is controlled by the control device 4. Therefore, the control device 4 has position information of the transport vehicle R.

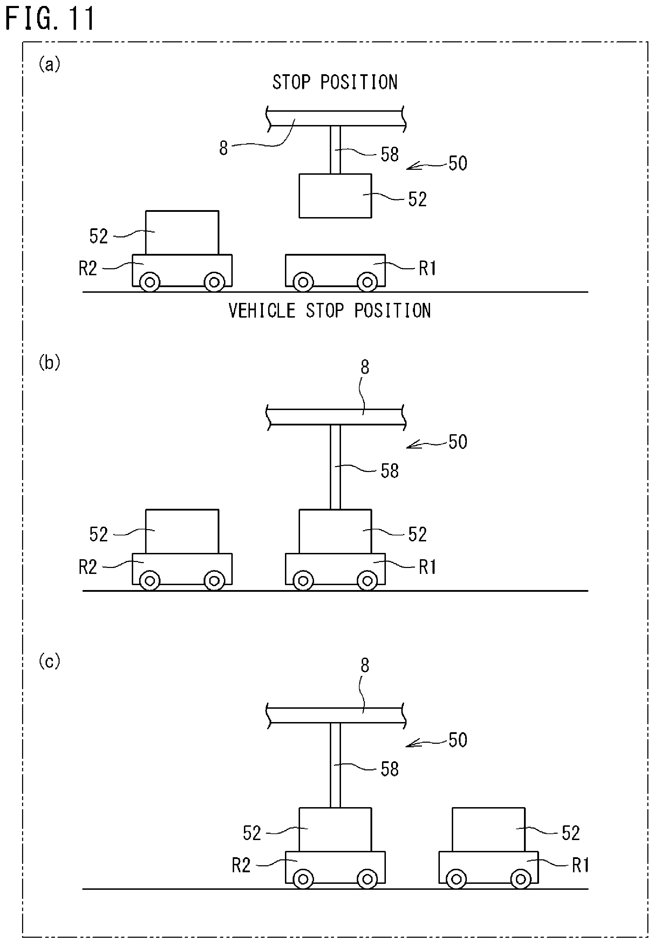

FIG. 11 is a diagram illustrating a mode when the containers 52 are transported and replaced by a plurality of transport vehicles R.

In FIG. 11, a case where the first transport vehicle R1 and the second transport vehicle R2 are used will be described.

As illustrated in (a) of FIG. 11, the first transport vehicle R1 and the second transport vehicle R2 run in a front-to-back line. The container 52 is not placed on the first transport vehicle R1. An empty container 52 is placed on the second transport vehicle R2 located behind the first transport vehicle R1.

In (a) of FIG. 11, the container device 50 is located at the vehicle stop position, and the first transport vehicle R1 is located at the vehicle stop position.

When the container device 50 stops at the stop position and the first transport vehicle R1 stops at the vehicle stop position, as illustrated in (b) of FIG. 11, the container device extends the coupling shaft 58 to lower the container 52. Thereafter, when the container 52 reaches the top plate Ru of the transport vehicle R, the container device 50 releases the connection (gripping) of the coupling portion 59.

Accordingly, the container 52 in which the fruit is loaded is separated from the movement mechanism 54 and placed on the top plate Ru. The container 52 is transported by the transport vehicle R.

The container device 50 shortens coupling shaft 58 upon decoupling container 52.

Thereafter, the first transport vehicle R1 moves and leaves the vehicle stop position with the container 52 loaded with the fruit placed thereon.

When the first transport vehicle R1 leaves the vehicle stop position, the second transport vehicle R2 then moves to the vehicle stop position and stops.

As illustrated in (c) of FIG. 11, when the second transport vehicle R2 stops at the vehicle stop position, the container device 50 extends the coupling shaft 58, grips the empty container 52 placed on the second transport vehicle R2, and connects the empty container 52 and the movement mechanism 54.

As described above, when the first transport vehicle R1 stops at the vehicle stop position, the first transport vehicle R1 receives the container 52 whose connection is released from the container device 50 and moves, the second transport vehicle R2 stops at the vehicle stop position after the first transport vehicle R1 moves, and the empty container 52 is connected to the movement mechanism 54 by the coupling portion 59 when the second transport vehicle R2 stops at the vehicle stop position.

In this case, the container device 50 can connect the empty container 52 after separating the container 52 in which the fruit is loaded, and can load the fruit again.

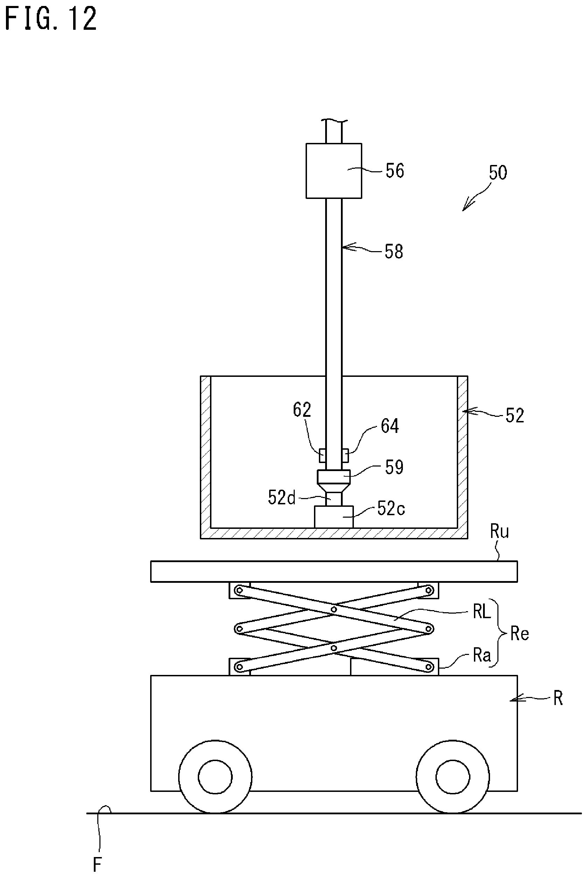

FIG. 12 is a diagram illustrating a main part of a container device 50 according to a modification of another embodiment. In FIG. 12, the container 52 is illustrated as a cross-sectional view.

This modification is different from the other embodiments described above in that the coupling shaft 58 does not extend and retract, and the top plate Ru of the transport vehicle R can move up and down in the vertical direction.

As illustrated in FIG. 12, the transport vehicle R includes a lifting mechanism Re that lifts and lowers the top plate Ru.

The lifting mechanism Re includes a link mechanism RL and an actuator Ra. The link mechanism RL is provided between the top plate Ru and the upper surface of the vehicle body of the transport vehicle R. The link mechanism RL is configured to be extendable and retractable in the vertical direction. The actuator Ra is provided at a proximal end of the link mechanism RL and drives the extending and retracting operation of the link mechanism RL. The actuator Ra can be controlled by a control device of the transport vehicle R. Therefore, the operation control of the lifting mechanism Re is performed by the control device of the transport vehicle R. The operation control of the lifting mechanism Re may be performed by the control device 4 that controls the transport vehicle R.

In this case, after the top plate Ru is raised, the container 52 in which the fruit is loaded can be placed on the top plate Ru.

### [Others]

It should be understood that the embodiments disclosed herein are illustrative in all respects and are not restrictive.

For example, in the above embodiment, the case where the rail unit 7 is provided on the support structure 6 that supports the solar power generation panels 2 has been exemplified, but the beam frame 6b and the support frame 6c of the support structure 6, which are parts of the support structure 6, may have a function of a rail for the work units 10.

In this case, the farmwork device 22 (the work units 10) can be installed without separately installing a dedicated rail other than the support structure 6.

In addition, in the above embodiment, the case where the farmwork system 1 includes the solar power generation panel 2 has been exemplified, but the present system may not include the solar power generation panel 2.

In addition, in the above embodiment, the case where the fruit of the crop C cultivated in the field F is grapes has been exemplified, but the present invention is not limited thereto, and other fruit trees, vegetables, and the like may be cultivated as the crop C.

Further, in the present embodiment, the case where the elevation angle variable mechanism 20 is used as the adjustment mechanism for adjusting the solar radiation amount of the field F has been exemplified. However, the adjustment mechanism only needs to be a mechanism capable of adjusting the solar radiation amount of the field F. For example, the solar power generation panel 2 may be formed of a transparent panel, and a film having a light control function may be used as the adjustment mechanism. In this case, a light control film is used by being superimposed on the transparent solar power generation panel 2. Accordingly, the field F is irradiated with sunlight appropriately adjusted by passing through the solar power generation panel 2 and the light control film.

The scope of the present invention is indicated not by the above meaning but by the claims, and is intended to include meanings equivalent to the claims and all modifications within the scope.

### REFERENCE SIGNS LIST

- 1: farmwork system
- 2: solar power generation panel
- 2a: cell
- 2b: panel frame
- 4: control device
- 4a: processing unit
- 4b: storage unit
- 4c: input/output unit
- 6: support structure
- 6a: pillar
- 6b: beam frame
- 6c: support frame
- 7: rail unit
- 8: rail
- 8a: first rail
- 8a1: end portion
- 8a2: slit
- 8b: second rail
- 8b1: opening
- 8c: relief portion
- 8d: inner surface
- 8k: internal space
- 8r: bottom plate
- 8r1: bottom plate
- 8r2: bottom plate
- 8s: slit
- 8s1: slit
- 8s2: slit
- 8s3: connecting slit
- 10: work unit
- 14: environment detection unit
- 16: camera
- 18: wireless communication device (access point)
- 20: elevation angle variable mechanism
- 20a: base
- 20b: support portion
- 20c: actuator
- 22: farmwork device
- 24: movement mechanism
- 26: control box
- 30: arm
- 30a: joint
- 32: end effector
- 32a: end effector
- 40: main body
- 42: wheel
- 43: wireless communication device
- 44: electric motor
- 45: storage battery
- 46: control device
- 46a: processing unit
- 46b: storage unit
- 47: tank
- 47a: receiving port
- 48: pomace storage tank
- 49: juice storage tank
- 50: container device
- 52: container
- 52a: side wall portion
- 52a1: side plate
- 52b: bottom portion
- 52b1: bottom plate
- 52c: beam portion
- 52d: projection
- 54: movement mechanism
- 56: control box
- 57: hinge
- 58: coupling shaft
- 58a: inner cylinder portion
- 58b: outer cylinder portion
- 59: coupling portion
- 60: transfer mechanism
- 60a: locking device
- 60b: closure device
- 62: measurement unit
- 64: detection unit
- 70: transport container
- 70a: receiving port
- 100: solar power generation mechanism
- C: crop
- F: farm field
- P1: position
- P2: position
- P3: position
- R: transport vehicle
- R1: first transport vehicle
- R2: second transport vehicle
- RL: link mechanism
- Ra: actuator
- Re: lifting mechanism
- Ru: top plate

## Claims

1. A conveyance system for a harvested product, the conveyance system comprising:
a rail array including a plurality of rails provided above a field in which a crop is cultivated; and
a container device that is suspended from the plurality of rails and is movable along the plurality of rails from a harvest position where a harvested product obtained by harvesting the crop is loaded to a predetermined stop position located at an edge of the rail array.

2. The conveyance system for the harvested product according to claim 1, wherein
the container device includes:
a measurement unit that measures a loading amount of the loaded harvested product; and
a movement mechanism that moves the harvested product toward the stop position when the loading amount satisfies a predetermined condition.

3. The conveyance system for the harvested product according to claim 1 or 2, further comprising:
a tank that is disposed below the predetermined stop position and stores the harvested product, wherein
the container device includes:
a container in which the harvested product is loaded; and
a transfer mechanism that opens and closes a bottom portion of the container to drop the harvested product downward, and
the tank includes a receiving port to receive the harvested product falling from the container.

4. The conveyance system for the harvested product according to claim 1, further comprising:
one or a plurality of harvested product transport vehicles capable of stopping at a vehicle stop position provided below the predetermined stop position, wherein
the one or plurality of harvested product transport vehicles includes a top plate in which a container for loading the harvested product included in the container device is placed.

5. The conveyance system for the harvested product according to claim 4, wherein
the container device includes:
a movement mechanism that moves the container along the rails; and
a coupling portion that releasably couples the container and the movement mechanism, and
when the container is located at the predetermined stop position and the one or plurality of harvested product transport vehicles is located at the vehicle stop position, the connection by the coupling portion is released.

6. The conveyance system for the harvested product according to claim 5, wherein
the container device includes an extendable and retractable coupling shaft provided between the coupling portion and the movement mechanism.

7. The conveyance system for the harvested product according to claim 5, wherein
the one or plurality of harvested product transportation carriages further include a lifting mechanism that lifts and lowers the top plate.

8. The conveyance system for the harvested product according to any one of claims 5 to 7, wherein
the plurality of harvested product transport vehicles includes a first harvested product transport vehicle on which the container is not placed and a second harvested product transport vehicle on which the container that is empty is placed,
the first harvested product transport vehicle receives the container whose connection is released from the container device and moves when the first harvested product transport vehicle is stopped at the vehicle stop position,
the second harvested product transport vehicle stops at the vehicle stop position after the first harvested product transport vehicle moves, and
the empty container is connected to the movement mechanism by the coupling portion when the second harvested product transport vehicle stops at the vehicle stop position.

9. The conveyance system for the harvested product according to claim 1, further comprising:
a harvested product transport vehicle capable of stopping at a vehicle stop position provided below the predetermined stop position, wherein
the container device includes a transfer mechanism that causes the harvested product to fall downward by opening and closing a bottom portion of the container for loading the harvested product included in the container device, and
the harvested product transport vehicle includes a transport container having a receiving port to receive the harvested product falling from the container.

10. The conveyance system for the harvested product according to claim 2, further comprising:
a farmwork device that moves along the plurality of rails, wherein
the movement mechanism follows the farmwork device until an amount of the harvested product satisfies a predetermined condition.

11. The conveyance system for the harvested product according to any one of claims 1 to 10, wherein
the container device includes a measurement unit that measures a loading amount of the loaded harvested product, and
the conveyance system further comprises an output unit that outputs the loading amount externally.

12. The conveyance system for the harvested product according to claim 11, wherein
the container device further includes a detection unit that detects a state of the harvested product, and
the output unit outputs the state together with the loading amount.

13. A container device that is provided above a field in which a crop is cultivated, is suspended from a plurality of rails constituting a rail array, and moves along the plurality of rails, the container device comprising:
a container in which a harvested product obtained by harvesting the crop is loaded;
a movement mechanism that moves the container along the rails;
a measurement unit that measures a loading amount of the harvested product loaded in the container; and
a control unit that controls, when the loading amount satisfies a predetermined condition, the movement mechanism to move the container to a predetermined stop position located at an edge of the rail array and stop the container.
